# EUROPÄISCHE PATENTANMELDUNG

(11) **EP 4 737 829 A1**
(43) Veröffentlichungstag der Anmeldung: **06.05.2026**
(21) Anmeldenummer: 24210320.8
(22) Anmeldetag: 31.10.2024
(51) Int. Cl.: F26B 3/04, B05D 3/00, F26B 3/30, F26B 3/347, F26B 13/10, F26B 25/22, H01M 4/00

(54) **VERFAHREN ZUM EINSTELLEN VON EINER RESTFEUCHTE, TROCKNUNGSEINHEIT UND TROCKNUNGSSYSTEM**

(71) Anmelder: Cellforce Group GmbH, 72138 Kirchentellinsfurt (DE)
(72) Erfinder: Gräf, Markus, 72072 Tübingen (DE)
(74) Vertreter: Müller Schupfner & Partner Patent- und Rechtsanwaltspartnerschaft mbB (Muc)

(57) **Zusammenfassung**

Die Erfindung betrifft ein Verfahren zum Einstellen von einer Restfeuchte von mindestens einer auf einem Substrat aufgebrachten Beschichtung durch mindestens eine Erwärmungseinheit, wobei das mit der mindestens einen Beschichtung beaufschlagte Substrat entlang einer Förderrichtung bewegt wird, wobei eine Restfeuchte der mindestens einen Beschichtung basierend auf Messdaten von mindestens einem Sensor ermittelt wird, und wobei abhängig von der ermittelten Restfeuchte der mindestens einen Beschichtung die mindestens eine Erwärmungseinheit aktiviert und/oder in ihrer Heizleistung geregelt wird. Des Weiteren betrifft die Erfindung eine Trocknungseinheit und ein Trocknungssystem.

## Beschreibung

Die Erfindung betrifft ein Verfahren zum Einstellen von einer Restfeuchte von mindestens einer auf einem Substrat aufgebrachten Beschichtung durch mindestens eine Erwärmungseinheit, wobei das mit der mindestens einen Beschichtung beaufschlagte Substrat entlang einer Förderrichtung bewegt wird. Des Weiteren betrifft die Erfindung eine Trocknungseinheit und ein Trocknungssystem.

Elektrochemische Energiespeicher, wie beispielsweise Lithium Ionen Batterien, bestehen regulär aus Anodenfolien, Separatoren und Kathodenfolien, die hergestellt und zu Elektrodenstapeln gebündelt werden. Bei der Herstellung von Anodenfolien und Kathodenfolien werden elektrisch leitfähige Trägerschichten mit einem oder mehreren Aktivmaterialien beschichtet. Ein Aktivmaterial kann beispielsweise mit einem Lösungsmittel und einem Bindemittel vermischt und auf die Trägerschicht appliziert werden. Zum Beseitigen des Lösungsmittels werden die resultierenden Anodenfolien und Kathodenfolien getrocknet. Es gibt verschiedene Verfahren zur Trocknung von Elektroden. Beispielsweise können die Beschichtungen durch induktives Erwärmen, Wärmekonvektion oder ein Bestrahlen mit Infrarotstrahlung getrocknet werden. Beispielsweise können Infrarotstrahlen durch Laser oder Infrarotstrahler erzeugt und auf die Beschichtung gerichtet werden.

Zum Einstellen einer definierten Restfeuchte in den Beschichtungen der Trägerschichten müssen die Beschichtungsparameter und die Trocknungsleistung von verschiedenen Trocknerzonen aufwendig aufeinander abgestimmt werden. Die Bestimmung bzw. Überprüfung der Restfeuchte im Material der Beschichtung bzw. dem Aktivmaterial erfolgt regulär manuell und diskontinuierlich am Ende des Vorgangs. Beispielsweise kann eine Restfeuchte von Wasser als Lösungsmittel mit Hilfe einer sogenannten Coulometrischen Karl-Fischer-Titration ermittelt werden, wobei einzelne Stichproben aus Anodenfolien oder Kathodenfolien ausgestanzt und beprobt werden.

Hierdurch ist die Überwachung der Restfeuchte auf eine geringe Anzahl an Proben reduziert. Durch eine derartige Überprüfung der Restfeuchte gestalten sich die Anfahrprozesse von Anlagen zur Trocknung von Beschichtungen besonders kompliziert und langwierig, da viele Versuchsreihen für ein finales Abstimmen der Anlagen erforderlich sind.

Es sind bereits Verfahren zum Ermitteln von Feuchtigkeitswerten einer Oberfläche durch Nahinfrarot (NIR)-Spektroskopie bekannt. Die Oberfläche wird mit Licht im Nahinfrarot bzw. mit einer Wellenlänge zwischen 780 und 2500 nm bestrahlt und kann mit dem Licht interagieren. Ein von der Oberfläche reflektiertes Wellenlängen-Spektrum kann detektiert und beispielsweise mit bereits bekannten Wellenlängen-Spektren verglichen werden, die in Abhängigkeit von einer Feuchtigkeit der Oberfläche variieren.

Die vorliegende Erfindung hat daher die Aufgabe, ein Verfahren zu schaffen, welches eine kontinuierliche Überwachung der Restfeuchte einer oder mehrerer Beschichtungen eines Substrats ermöglicht. Diese Aufgabe wird durch die im Anspruch 1 angegebenen Merkmale gelöst. Weitere vorteilhafte Ausgestaltungen der Erfindung sind Bestandteil der Unteransprüche.

Gemäß einem Aspekt der Erfindung wird ein Verfahren zum Einstellen von einer Restfeuchte von mindestens einer auf einem Substrat aufgebrachten Beschichtung durch mindestens eine Erwärmungseinheit bereitgestellt. Die Restfeuchte der Beschichtung kann als eine Feuchte bzw. ein Feuchtigkeitsgehalt der Beschichtung definiert sein. Die Restfeuchte kann sich auf eine beliebige Flüssigkeit der Beschichtung beziehen. Beispielsweise kann ein restliches Lösungsmittel oder flüssiges Bindemittel der Beschichtung die Feuchtigkeit der Beschichtung verursachen. Die Feuchtigkeit kann durch Wasser, eine wässrige Lösung oder durch eine andere Flüssigkeit verursacht sein.

Das mit der mindestens einen Beschichtung beaufschlagte Substrat wird entlang einer Förderrichtung bewegt. Das mit der Beschichtung versehene Substrat kann bandförmig bzw. kontinuierlich oder diskret entlang der Förderrichtung, beispielsweise mittels eines Förderbands, bewegt werden.

Das Substrat kann einseitig oder beidseitig mit jeweils mindestens einer Beschichtung versehen sein. Dabei kann die mindestens eine Beschichtung mehrlagig oder einlagig ausgebildet sein. Die jeweiligen Lagen bzw. Schichten der Beschichtung können aus gleichen oder unterschiedlichen Materialien und/oder Körnungen bestehen.

Die Restfeuchte der mindestens einen Beschichtung wird basierend auf Messdaten von mindestens einem Sensor ermittelt. Die Messdaten können vorzugsweise kontaktlos bzw. berührungslos ermittelt werden. Abhängig von der ermittelten Restfeuchte der mindestens einen Beschichtung wird die mindestens eine Erwärmungseinheit aktiviert und/oder in ihrer Heizleistung gesteuert und/oder geregelt.

Durch das erfindungsgemäße Verfahren wird eine geregelte Bahntrocknung mit mindestens einem Sensor, beispielsweise für eine sogenannte Inline-Restfeuchtemessung, und einer aktiv geregelten Energiezuführung realisiert. Die Trocknung kann durch die Erwärmungseinheit, beispielsweise in Form einer der Infrarotquelle, einer induktiven Energiezuführung oder einer Laserquelle realisiert werden. Hierdurch kann beispielsweise die Beschichtung für die Herstellung von Anodenfolien und Kathodenfolien von Batteriezellen hinsichtlich der Restfeuchte optimiert werden.

Die mindestens eine Erwärmungseinheit ist dem Sensor in Förderrichtung nachgelagert angeordnet, wobei ein Abstand zwischen der Erwärmungseinheit und dem Sensor derart gewählt werden kann, dass die Messdaten des Sensors ausgewertet und Steuerbefehle zum Ansteuern der Erwärmungseinheit erzeugt werden können, um einen durch den Sensor gemessenen Abschnitt der Beschichtung mit Wärme zu beaufschlagen.

Je nach Ausgestaltung können mehrere Erwärmungseinheit mit vorgeschalteten Sensoren dazu eingesetzt werden, über eine Bahnbreite und/oder Bahnlänge ein gewünschtes, zeitliches Trocknungsprofil einzuprägen.

Ein optimales Trockenergebnis kann beispielsweise ein Minimieren der Bindermigration, ein Optimieren der Haftung der Beschichtung auf dem Substrat, ein Optimieren der elektrochemischen Eigenschaften der jeweiligen Beschichtung, und dergleichen umfassen.

Das mindestens eine Substrat kann einlagig oder mehrlagig ausgebildet sein. Je nach Ausgestaltung kann zwischen dem Substrat und der mindestens einen Beschichtung ein Haftmittel aufgetragen sein. Das Substrat kann beidseitig mit zwei oder mehr Beschichtungen versehen sein. Je nach Ausgestaltung können auf einer oder beiden Seiten des Substrats mehrere Beschichtungen übereinander appliziert sein. Das Substrat kann ein elektrisch leitfähiges Substrat, wie beispielsweise Kupfer, eine Kupferlegierung, Aluminium, Aluminiumlegierung und dergleichen sein. Dabei ist eine flexible oder eine starre Ausbildung des Substrats möglich.

Die Energiezuführungen durch die mindestens eine Erwärmungseinheit können besonders zielgerichtet erfolgen, wenn die mindestens eine Beschichtung ortsaufgelöst entlang der Förderrichtung und/oder quer zur Förderrichtung durch die mindestens eine Erwärmungseinheit mit Wärme beaufschlagt und/oder in ihrer Heizleistung geregelt wird. Insbesondere kann durch den Wärmeeintrag der Erwärmungseinheit ein zeitliches und/oder örtliches Trocknungsprofil realisiert werden, welches dynamisch anpassbar ist.

Ein örtliches Trocknungsprofil kann beispielsweise eine entlang der Förderrichtung und/oder quer zur Förderrichtung variierende Verteilung der erzeugten Wärmeleistung aufweisen, welche der Beschichtung und/oder dem Substrat zugeführt wird. Ein zeitliches Trocknungsprofil kann eine zeitlich variierende Erwärmung der Beschichtung und/oder des Substrats aufweisen. Beispielsweise kann eine zeitabhängig Heizkurve durch die mindestens eine Erwärmungseinheit abbildbar sein.

Gemäß einem weiteren Ausführungsbeispiel wird die Restfeuchte der mindestens einen Beschichtung ortsaufgelöst entlang der Förderrichtung und/oder quer zur Förderrichtung ermittelt. Durch diese Maßnahme kann der Feuchtigkeitsgehalt der Beschichtung besonders präzise ermittelt werden. Insbesondere können Schwankungen in der verbleibenden Feuchtigkeit der Beschichtung detektiert werden. Der Feuchtigkeitsgehalt kann beispielsweise basierend auf Messdaten eines ortsaufgelösten Sensors und/oder mehrerer Sensoren ermittelt werden, welche das Prinzip der Nahinfrarot-Spektroskopie verwenden.

Die Sensoren können somit eine Oberfläche der Beschichtung mit Strahlen im NIR-Wellenlängenspektrum bestrahlen und ein reflektiertes und/oder rückgestreutes Wellenlängenspektrum detektieren. In Abhängigkeit vom Feuchtigkeitsgehalt ändert sich ein derartig detektiertes Wellenlängenspektrum. Anhand des aufgezeichneten bzw. detektierten ermittelten Wellenlängenspektrums kann ein statistischer Abgleich mit bereits bekannten oder hinterlegten Wellenlängenspektren durchgeführt werden, um einen Feuchtigkeitsgehalt bzw. die Restfeuchte zu ermitteln.

Je nach Ausgestaltung kann das detektierte Wellenlängenspektrum durch Algorithmen, Simulationen, Regressionen und dergleichen verarbeitet werden, um einen Feuchtigkeitsgehalt zu bestimmen oder die Bestimmung des Feuchtigkeitsgehalts zu unterstützen.

Nach einer weiteren Ausführungsform wird basierend auf der ortsaufgelöst ermittelten Restfeuchte der mindestens einen Beschichtung die mindestens eine Beschichtung ortsaufgelöst entlang der Förderrichtung und/oder quer zur Förderrichtung durch die mindestens eine Erwärmungseinheit mit Wärme beaufschlagt und/oder in ihrer Heizleistung geregelt. Durch diese Maßnahme kann basierend auf den zuvor ortsaufgelöst ermittelten Abweichungen und Schwankungen der Restfeuchte eine gezielte Trocknung eingeleitet werden, die eine gleichmäßige bzw. über die Bahnbreite oder Bahnlänge der Beschichtung konstanten Feuchtigkeitsgehalt ohne Schwankungen aufweist. Insbesondere können die Energiezuführungen der mindestens einen Erwärmungseinheit über eine ortsaufgelöste Closed-loop-Regelung entlang der Bahnbreite und/oder Bahnlänge mit einem als ortsaufgelösten Restfeuchte-Sensor ausgebildeten Sensor realisiert werden kann.

Eine örtlich konstante bzw. gleichmäßige Verteilung der Restfeuchte kann eingestellt werden, wenn anhand der Messdaten des mindestens einen Sensors eine örtliche Verteilung der Restfeuchte von mindestens einem Oberflächenabschnitt der Beschichtung ermittelt wird, wobei durch die mindestens eine Erwärmungseinheit ein auf die ermittelte örtliche Verteilung der Restfeuchte angepasstes Erwärmungsprofil eingestellt wird. Durch die gleichmäßige Verteilung der Restfeuchte über die gesamte Oberfläche der Beschichtung kann die Produktqualität verbessert werden.

Gemäß einem weiteren Aspekt der Erfindung wird eine Trocknungseinheit bereitgestellt. Die Trocknungseinheit weist mindestens einen Sensor auf, welcher dazu eingerichtet ist, von einer Restfeuchte abhängige Messdaten von einer Oberfläche mindestens einer Beschichtung zu ermitteln. Des Weiteren ist mindestens eine Erwärmungseinheit vorgesehen. Die mindestens eine Erwärmungseinheit ist dazu eingerichtet, die mindestens eine Beschichtung mit Wärme zu beaufschlagen.

Nach einem weiteren Aspekt der Erfindung wird ein Trocknungssystem bereitgestellt, welches mindestens eine erfindungsgemäße Trocknungseinheit aufweist. Das Trocknungssystem kann Teil einer Beschichtungsanlage sein oder einer Beschichtungsanlage nachgelagert sein. Das Trocknungssystem weist mindestens eine Fördervorrichtung zum Bewegen eines mit der mindestens einen Beschichtung versehenen Substrats zumindest entlang einer Förderrichtung durch die mindestens eine Trocknungseinheit oder entlang der mindestens einen Trocknungseinheit.

Das mindestens eine Substrat mit der applizierten Beschichtung kann beispielsweise in Form von Folien oder in Form eines Bands ausgebildet sein und somit kontinuierlich oder diskret die mindestens eine Trocknungseinheit passieren. Die Beschichtung kann als eine Nassbeschichtung auf das Substrat aufgebracht sein und anschließend getrocknet werden. Dabei kann das erfindungsgemäße Verfahren als Trocknungsschritt fungieren oder einem Trocknungsschritt nachgelagert durchgeführt werden.

Durch den Einsatz der mindestens einen Trocknungseinheit kann eine beschleunigte Inbetriebnahme oder Veränderung einer Beschichtungsanlage realisiert werden, da der geregelte Trocknungsbetrieb unabhängig von der Bahngeschwindigkeit vonstattengehen kann. Durch die Kombination des Sensors und der Erwärmungseinheit kann für jeden Bereich bzw. Punkt der Beschichtung, beispielsweise einer Elektrodenbahn, ein identisches, zeitliches Trocknungsprofil vorgegeben werden. Diese Maßnahme minimiert den kostenseitigen und zeitlichen Aufwand, um von einer Pilotanwendung auf eine Serienanlage zu wechseln. Insbesondere kann für jeden Punkt auf der Beschichtung ein identisches Trocknungsprofil gewährleistet werden.

Darüber hinaus ermöglicht die aktive Regelung des Trocknungsvorgangs und der Einstellung der definierten Restfeuchtigkeit eine Erhöhung der Bahngeschwindigkeit. Der Ausschuss bei der Herstellung von Elektroden kann durch das Trocknungssystem reduziert werden. Dieser Effekt wirkt sich auch auf die Herstellkosten und Kosten der Inbetriebnahme positiv aus.

Gemäß einem Ausführungsbeispiel ist der mindestens eine Sensor dazu eingerichtet, von einer Restfeuchte der Beschichtung abhängige Messdaten ortsaufgelöst zu ermitteln. Alternativ oder zusätzlich weist das Trocknungssystem mindestens ein Array aus mehreren Sensoren auf. Hierdurch kann mit Hilfe von NIR-Spektroskopie eine ortsaufgelöste Feuchtemessung der Oberfläche der Beschichtung umgesetzt werden.

Örtliche Variationen in dem Feuchtigkeitsgehalt der Beschichtung können besonders effizient beseitigt werden, wenn die mindestens eine Erwärmungseinheit dazu eingerichtet ist, die mindestens eine Beschichtung ortsaufgelöst mit variierbarer Heizleistung zu beaufschlagen. Alternativ oder zusätzlich sind mehrere nebeneinander angeordnete Erwärmungseinheiten vorgesehen, um die mindestens eine Beschichtung ortsaufgelöst mit variierbarer Heizleistung zu beaufschlagen. Hierdurch können die Energiezuführungen ortsaufgelöst angesteuert werden, sodass eine ortsaufgelöste Closed-Loop-Regelung über der Bahnbreite bzw. quer zur Förderrichtung und/oder Bahnlänge bzw. in Förderrichtung mit einem ortsaufgelösten Restfeuchte-Sensor umsetzbar ist.

Nach einer weiteren Ausführungsform ist die mindestens eine Erwärmungseinheiten als ein Laser oder eine Laserdiode ausgebildet, wobei mehrere nebeneinander angeordnete Erwärmungseinheiten als ein eindimensionales oder zweidimensionales Laser-Array ausgeführt sind. Beispielsweise können die Laser als VCSEL Laserdioden ausgebildet sein oder das Laser-Array aus mehreren VCSEL Laserdioden bestehen. Die einzelnen VCSEL Laserdioden, beispielsweise eines Mikrolaser-Arrays, können einzeln angesteuert werden, um einen präzisen und örtlich begrenzten Wärmeeintrag in die Beschichtung zu erzielen. Diese Maßnahme ermöglicht ein gerichtetes Einbringen von Energiemengen auf die Beschichtung in ortsaufgelöster Form.

Ein zeitliches Trocknungsprofil der mindestens einen Beschichtung kann technisch besonders einfach realisiert werden, wenn das Trocknungssystem mehrere in Förderrichtung nacheinander und/oder beidseitig des Substrats parallel zueinander angeordnete Trocknungseinheiten aufweist. Beispielsweise können mehrere Trocknungseinheiten bzw. Bahntrocknungseinheiten mit Sensor Inline-Restfeuchtemessung und Erwärmungseinheiten zur Energiezuführung hintereinander geschaltet sein, um ein vordefiniertes, zeitliches Trocknungsprofil über der Bahnlänge zu realisieren. Diese Maßnahme ermöglicht ein optimiertes Trocknungsergebnis.

Weiterhin können bei einer beidseitigen Steuerung und/oder Regelung des Feuchtigkeitsgehalts, beispielsweise bei einem beidseitig beschichteten Substrat, jeweils ein oder mehr Trocknungseinheiten oder zumindest Erwärmungseinheiten vorgesehen sein, um gleichzeitig oder in Förderrichtung zueinander versetzt die Beschichtungen des Substrats mit Wärme zu beaufschlagen.

Nachstehend werden mehrere Ausführungsbeispiele der Erfindung anhand der Zeichnungen näher erläutert. Es zeigen:
Fig. 1 eine schematische Darstellung eines Trocknungssystems mit einer Trocknungseinheit gemäß einer Ausführungsform der Erfindung,
Fig. 2 ein schematisches Ablaufdiagramm zum Veranschaulichen eines Verfahrens gemäß einer Ausführungsform der Erfindung,
Fig. 3 ein schematisches Ablaufdiagramm zum Veranschaulichen eines Verfahrens gemäß einer weiteren Ausführungsform der Erfindung,
Fig. 4 eine schematische Darstellung eines Trocknungssystems gemäß einer weiteren Ausführungsform der Erfindung, und
Fig. 5 eine schematische Darstellung eines Trocknungssystems mit zwei Trocknungseinheiten gemäß einer weiteren Ausführungsform der Erfindung.

In den Abbildungen kennzeichnen identische Bezugsziffern dieselben Elemente bzw. konstruktiven Bestandteile. Die Größen und relativen Positionen der Elemente in den Abbildungen sind nicht unbedingt maßstabsgetreu gezeichnet, und einige dieser Elemente sind vergrößert dargestellt und der Übersicht halber angepasst positioniert. Darüber hinaus sollen die besonderen Formen der gezeichneten Elemente keine Informationen über die tatsächliche Form der einzelnen Elemente vermitteln, sondern wurden lediglich zur leichteren Erkennbarkeit in den Abbildungen ausgewählt.

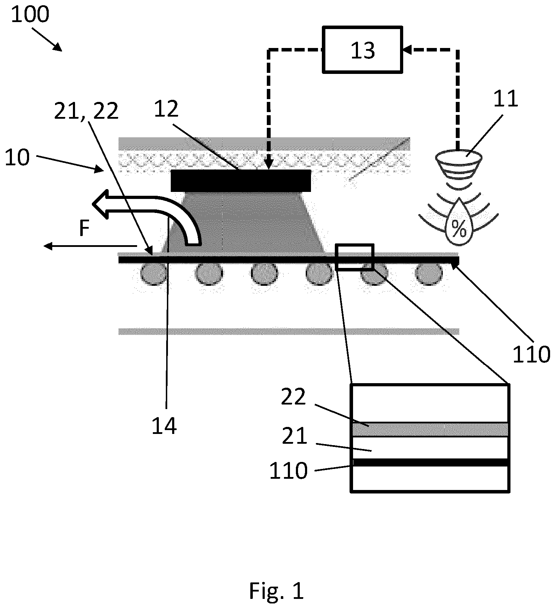

Fig. 1 zeigt eine schematische Darstellung eines Trocknungssystems 100 mit einer Trocknungseinheit 10 gemäß einer Ausführungsform der Erfindung. Das Trocknungssystem 100 kann Teil einer nicht dargestellten Beschichtungsanlage sein oder einer Beschichtungsanlage nachgelagert sein.

Das Trocknungssystem 100 weist mindestens eine Fördervorrichtung in Form eines Förderbands 110 zum Bewegen eines mit der mindestens einen Beschichtung 22 versehenen Substrats 21 zumindest entlang einer Förderrichtung F durch die mindestens eine Trocknungseinheit 10 oder entlang der mindestens einen Trocknungseinheit 10.

Das mindestens eine Substrat 21 mit der applizierten Beschichtung 22 ist beispielhaft in Form einer Metallfolie bzw. eines folienförmigen Metallbands ausgebildet und passiert die Trocknungseinheit 10 entlang der Förderrichtung F. Die Beschichtung 22 kann als eine Nassbeschichtung auf das Substrat aufgebracht sein und anschließend getrocknet werden.

Die Trocknungseinheit 10 weist mindestens einen Sensor 11 auf, welcher dazu eingerichtet ist, von einer Restfeuchte abhängige Messdaten von einer Oberfläche der mindestens einen Beschichtung 22 zu ermitteln. Des Weiteren weist die Trocknungseinheit 10 mindestens eine Erwärmungseinheit 12 auf. Die mindestens eine Erwärmungseinheit 12 ist dazu eingerichtet, die mindestens eine Beschichtung 22 mit Wärme zu beaufschlagen

Der Sensor 11 ist als ein NIR-Sensor bzw. NIR-Spektrometer ausgebildet und kann Strahlung mit einem Wellenlängenbereich zwischen 780 und 2500 nm erzeugen, um die Beschichtung 22 damit zu belichten und ein reflektiertes und/oder rückgestreutes Wellenlängenspektrum zu detektieren. In Abhängigkeit vom Feuchtigkeitsgehalt der Beschichtung 22 ändert sich ein derartig detektiertes Wellenlängenspektrum. Anhand des aufgezeichneten bzw. detektierten ermittelten Wellenlängenspektrums kann ein statistischer Abgleich mit bereits bekannten oder hinterlegten Wellenlängenspektren durchgeführt werden, um einen Feuchtigkeitsgehalt bzw. die Restfeuchte zu ermitteln. Hierfür kann der Sensor 11 mit einer Steuereinheit bzw. einem Rechner 13 verbunden sein.

Basierend auf den Messdaten des Sensors 11 kann die Steuereinheit 13 eine Ansteuerung der Erwärmungseinheit 12 umsetzen. Hierfür kann eine Closed-Loop-Steuerung und/oder Regelung vorgesehen sein, die eine Trocknung durch Erwärmung gezielt und abhängig von dem ermittelten Feuchtigkeitsgehalt der Beschichtung 22 einleiten kann. Dabei können die Messung des Feuchtigkeitsgehalts bzw. der Restfeuchte und die Beaufschlagung mit Wärme lokal beschränkt oder mit einer variierenden Verteilung entlang der Förderrichtung F und/oder quer zur Förderrichtung F erfolgen.

Die Restfeuchte bzw. der Feuchtigkeitsgehalt der Beschichtung 22 kann sich auf eine beliebige Flüssigkeit der Beschichtung 22 beziehen. Beispielsweise kann ein restliches Lösungsmittel oder flüssiges Bindemittel der Beschichtung 22 die Feuchtigkeit der Beschichtung 22 verursachen. Die Feuchtigkeit kann durch Wasser, eine wässrige Lösung oder durch eine andere Flüssigkeit verursacht werden.

Zum Einstellen von konstanten und wiederholbaren Entfeuchtungsraten der Beschichtung 22 durch die Erwärmungseinheit 12 wird ein freigesetzter Dampf und/oder Dunst durch eine kontrollierte Strömung 14 abtransportiert. Die Strömung 14 kann durch einen Gasstrom realisiert sein, welcher aus Luft, einem Luftgemisch, mindestens einem Edelgas und dergleichen bestehen kann. Insbesondere kann der Gasstrom in gereinigter Form vorliegen, um ein nachträgliches Einbringen von Verunreinigungen auf die Beschichtung 22 zu vermeiden.

Die mindestens eine Erwärmungseinheit agiert als eine in der Heizungsleistung und dem lokalen Beheizungsort steuerbare Heizung. Beispielsweise kann die Erwärmungseinheit als ein steuerbarer Gasheizer, ein Elektroheizer, ein Thermoölheizer, ein Infrarotheizer, eine steuerbare Induktionsaufwärmung oder als eine Laserheizung ausgebildet sein.

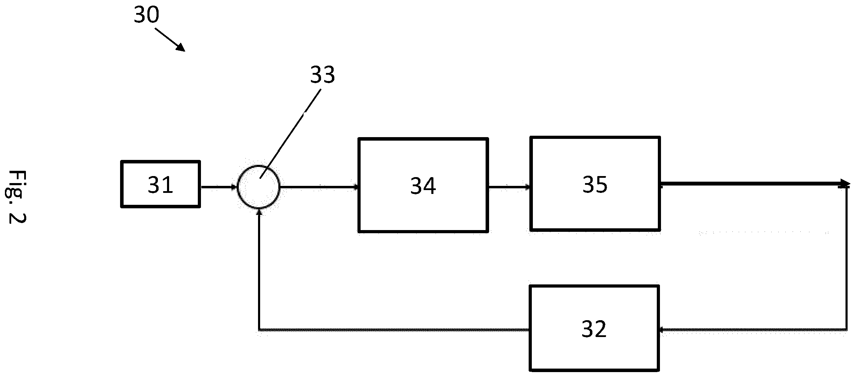

In Fig. 2 ist ein schematisches Ablaufdiagramm zum Veranschaulichen eines Verfahrens 30 gemäß einer Ausführungsform der Erfindung gezeigt. Das Verfahren 30 dient zum Einstellen von einer Restfeuchte bzw. eines Feuchtigkeitsgehalts von mindestens einer auf einem Substrat 21 aufgebrachten Beschichtung 22 durch mindestens eine Erwärmungseinheit 12. Die Beschreibung des in Fig. 2 visualisierten Verfahrens 30 erfolgt mit Bezug auf das Trocknungssystem 100 und die Trocknungseinheit aus Fig. 1.

Die Restfeuchte der Beschichtung 22 kann als eine Feuchte bzw. ein Feuchtigkeitsgehalt der Beschichtung 22 definiert sein. Die Restfeuchte kann sich auf eine beliebige Flüssigkeit der Beschichtung 22 beziehen. Beispielhaft wird die Feuchtigkeit der Beschichtung 22 durch Wasser verursacht.

In einem Schritt 31 wird das mit der mindestens einen Beschichtung 22 beaufschlagte Substrat 21 entlang der Förderrichtung F bewegt.

In einem weiteren Schritt 32 wird die Restfeuchte der mindestens einen Beschichtung 22 basierend auf Messdaten von mindestens einem Sensor 11 ermittelt. Die Messdaten können vorzugsweise kontaktlos bzw. berührungslos ermittelt werden.

Anschließend wird in einem Schritt 33 des Verfahrens 30 eine Differenz zwischen der ermittelten Restfeuchte bzw. dem ermittelten verbleibenden Feuchtigkeitsgehalt im der Beschichtung 22 und einem Sollwert für die Restfeuchtigkeit berechnet. Dieser Schritt 33 kann beispielsweise durch die Steuereinheit 13 erfolgen.

Die Steuereinheit 13 kann basierend auf der ermittelten Restfeuchte und/oder basierend auf der Differenz zwischen der ermittelten Restfeuchte und dem Sollwert für die Restfeuchte Steuerbefehle zum Ansteuern der Erwärmungseinheit 12 erzeugen 34.

Die Erwärmungseinheit 12 wird durch die Steuereinheit 13 aktiviert und kann die Restfeuchte der Beschichtung 22 auf den Sollwert einstellen 35. Abhängig von der ermittelten Restfeuchte der mindestens einen Beschichtung 22 wird die mindestens eine Erwärmungseinheit 12 aktiviert und/oder in ihrer Heizleistung geregelt.

Je nach Ausgestaltung kann nach dem Heizvorgang bzw. dem Einstellen der Restfeuchte 35 eine erneute Messung der Restfeuchte durch einen weiteren Sensor 11 erfolgen 32.

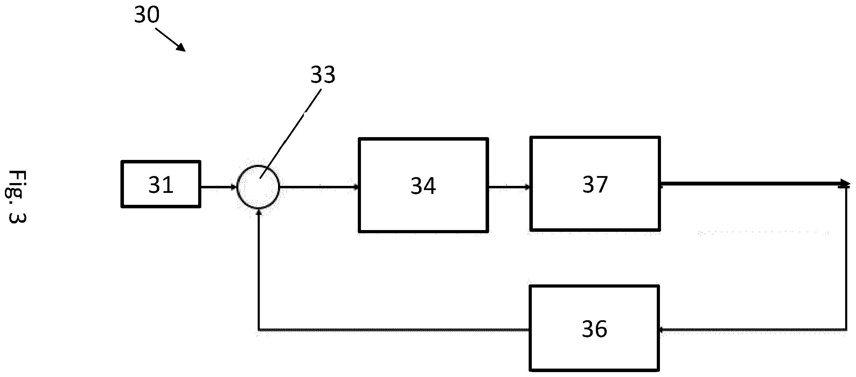

Fig. 3 zeigt ein schematisches Ablaufdiagramm zum Veranschaulichen eines Verfahrens 30 gemäß einer weiteren Ausführungsform der Erfindung. Im Unterschied zum in Fig. 2 veranschaulichten Verfahren 30 erfolgt eine ortsaufgelöste Closed-loop-Regelung entlang der Bahnbreite und/oder Bahnlänge der Beschichtung 22. Die Bahnbreite erstreckt sich quer zur Förderrichtung F und die Bahnlänge entlang der Förderrichtung F.

Die Restfeuchte der mindestens einen Beschichtung 22 wird ortsaufgelöst entlang der Förderrichtung F und/oder quer zur Förderrichtung F ermittelt 36. Durch diese Maßnahme kann der Feuchtigkeitsgehalt der Beschichtung 22 besonders präzise ermittelt werden. Insbesondere können Schwankungen in der verbleibenden Feuchtigkeit der Beschichtung 22 detektiert werden. Der Feuchtigkeitsgehalt kann beispielsweise basierend auf Messdaten eines ortsaufgelösten Sensors 11 und/oder mehrerer Sensoren 11 ermittelt werden, welche das Prinzip der Nahinfrarot-Spektroskopie verwenden.

Die Energiezuführungen durch die mindestens eine Erwärmungseinheit 12 können ebenfalls ortsaufgelöst entlang der Förderrichtung F und/oder quer zur Förderrichtung F durch die mindestens eine Erwärmungseinheit 12 erfolgen 37. Insbesondere kann durch den Wärmeeintrag der Erwärmungseinheit 12 ein zeitliches und/oder örtliches Trocknungsprofil realisiert werden, welches dynamisch an die Messergebnisse des Sensors 11 anpassbar ist.

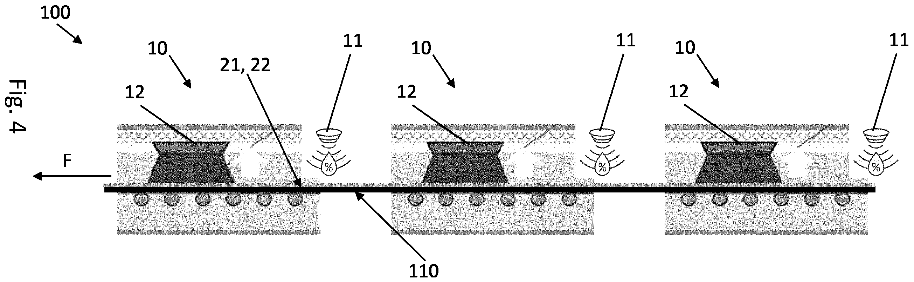

Fig. 4 zeigt eine schematische Darstellung eines Trocknungssystems 100 mit mehreren in Förderrichtung F nacheinander angeordneten Trocknungseinheiten 10 gemäß einer Ausführungsform der Erfindung. Im Unterschied zum in Fig. 1 gezeigten Trocknungssystem 100 sind beispielhaft drei Trocknungseinheiten 10 vorgesehen.

Die jeweiligen Sensoren 11 können somit mehrmals nach einem Trocknungsvorgang durch eine Erwärmungseinheit 12 eine Messung von Feuchtigkeitswerten vornehmen und somit die in Fig. 2 oder Fig. 3 dargestellten Verfahren 30 mehrmals durchführen. Je nach Ausgestaltung können mit jeder Wiederholung des Verfahrens 30 andere Sollwerte für die Restfeuchtigkeit eingestellt werden, um eine stufenweise Trocknung der Beschichtung 22 zu realisieren.

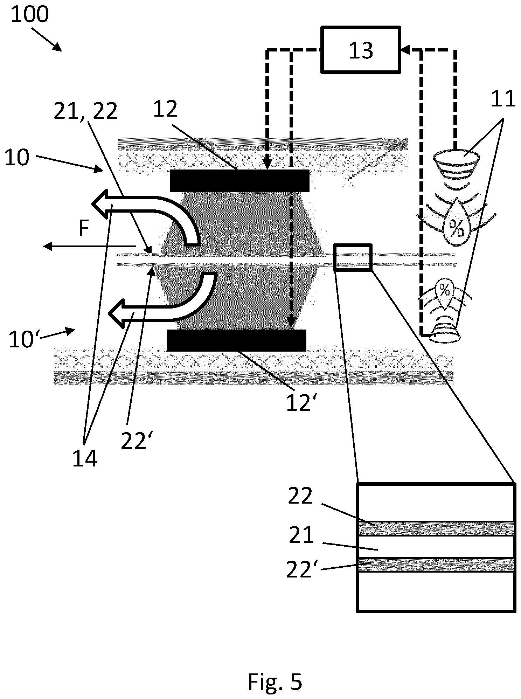

In Fig. 5 ist eine schematische Darstellung eines Trocknungssystems 100 mit zwei Trocknungseinheiten 10, 10' gemäß einer weiteren Ausführungsform der Erfindung gezeigt. Im Unterschied zum in Fig. 1 gezeigten Ausführungsbeispiel weist das Substrat 21 mehrere Beschichtungen 22, 22' auf. Dabei ist das Substrat 21 beidseitig beschichtet. Im dargestellten Ausführungsbeispiel weist jede Seite des Substrats 21 der Übersicht halber jeweils eine Beschichtung 22, 22' auf. Dieses Ausführungsbeispiel dient keiner Einschränkung im Hinblick auf die Anzahl der Beschichtungen 22, 22`.

Somit kann eine oder beide Seiten des Substrats 21 mehrere übereinander applizierte Beschichtungen 22, 22' und/oder Schichtstrukturen mit gleichen oder unterschiedlichen Körnungen aufweisen.

In der beispielhaften Vergrößerung ist die beidseitige Beschichtung 22, 22' des Substrats 21 veranschaulicht. Im dargestellten Abschnitt des Trocknungssystems 100 wird das Substrat mit den Beschichtungen 22, 22' beispielhaft schwebend geführt, um eine beidseitige Messung des Feuchtigkeitsgehalts der beiden Beschichtungen 22, 22' umzusetzen. Hierfür sind zwei Sensoren 11 vorgesehen, die parallel auf beiden Seiten des Substrats 21 positioniert sind. Analog hierzu ist auf jeder Seite des Substrats 21 auch jeweils eine Erwärmungseinheit 12, 12' vorgesehen. Die Erwärmungseinheiten 21, 12' können beide Beschichtungen 22, 22' gleichzeitig erwärmen. Aufgrund der beidseitigen Erwärmung kann die erforderliche Leistung der Erwärmungseinheiten 12, 12' verringert werden.

Entsprechend dem in Fig. 1 gezeigten Ausführungsbeispiel wird auch hier die verdampfte oder verdunstete Feuchtigkeit durch beidseitig eingestellte Strömungen 14 abtransportiert. Die Steuereinheit 13 kann beispielsweise einen Volumenstrom der Strömungen im Rahmen der Closed-Loop-Steuerung und/oder Regelung einstellen. Weiterhin erfolgt im dargestellten Ausführungsbeispiel die Anbindung der Sensoren 11 und der Erwärmungseinheiten 12, 12' an eine Steuereinheit 13. Alternativ kann für jede Seite bzw. jede Beschichtung 22, 22' eine separate Steuereinheit 13 vorgesehen sein.

In einer alternativen Ausgestaltung können die Erwärmungseinheiten 12, 12' und/oder die Sensoren 11 in Förderrichtung F zueinander versetzt angeordnet sein, um eine präzise individuelle Steuerung und/oder Regelung der verbleibenden Feuchtigkeit in den jeweiligen Beschichtungen 22, 22' zu erzielen.

## Patentansprüche

1. Verfahren (30) zum Einstellen einer Restfeuchte von mindestens einer auf einem Substrat (21) aufgebrachten Beschichtung (22) durch mindestens eine Erwärmungseinheit (12), wobei das mit der mindestens einen Beschichtung (22) beaufschlagte Substrat (21) entlang einer Förderrichtung (F) bewegt wird, wobei eine Restfeuchte der mindestens einen Beschichtung (22) basierend auf Messdaten von mindestens einem Sensor (11) ermittelt wird, und wobei abhängig von der ermittelten Restfeuchte der mindestens einen Beschichtung (22) die mindestens eine Erwärmungseinheit (12) aktiviert und/oder in ihrer Heizleistung gesteuert und/oder geregelt wird.

2. Verfahren nach Anspruch 1, wobei die mindestens eine Beschichtung (22) ortsaufgelöst entlang der Förderrichtung (F) und/oder quer zur Förderrichtung (F) durch die mindestens eine Erwärmungseinheit (12) mit Wärme beaufschlagt wird.

3. Verfahren nach Anspruch 1 oder 2, wobei die Restfeuchte der mindestens einen Beschichtung (22) ortsaufgelöst entlang der Förderrichtung (F) und/oder quer zur Förderrichtung (F) anhand von Messdaten von mindestens einem Sensor (11) ermittelt wird.

4. Verfahren nach Anspruch 3, wobei basierend auf der ortsaufgelöst ermittelten Restfeuchte der mindestens einen Beschichtung (22) die mindestens eine Beschichtung (22) ortsaufgelöst entlang der Förderrichtung (F) und/oder quer zur Förderrichtung (F) durch die mindestens eine Erwärmungseinheit (12) mit Wärme beaufschlagt wird.

5. Verfahren nach einem der Ansprüche 1 bis 4, wobei anhand der Messdaten des mindestens einen Sensors (11) eine örtliche Verteilung der Restfeuchte von mindestens einem Oberflächenabschnitt der Beschichtung (22) ermittelt wird, wobei durch die mindestens eine Erwärmungseinheit (12) ein auf die ermittelte örtliche Verteilung der Restfeuchte des mindestens einen Oberflächenabschnitts angepasstes Erwärmungsprofil eingestellt wird.

6. Trocknungseinheit (10), aufweisend mindestens einen Sensor (11), welcher dazu eingerichtet ist, von einer Restfeuchte abhängige Messdaten von einer Oberfläche mindestens einer Beschichtung (22) zu ermitteln, aufweisend mindestens eine Erwärmungseinheit (12), welche dazu eingerichtet ist, die mindestens eine Beschichtung (22) eines Substrats (21) mit Wärme zu beaufschlagen.

7. Trocknungseinheit nach Anspruch 6, wobei der mindestens eine Sensor (11) dazu eingerichtet ist, von einer Restfeuchte der Beschichtung (22) abhängige Messdaten ortsaufgelöst zu ermitteln und/oder wobei die Trocknungseinheit (10) mindestens ein Array aus mehreren Sensoren (11) aufweist.

8. Trocknungseinheit nach Anspruch 6 oder 7, wobei die mindestens eine Erwärmungseinheit (12) dazu eingerichtet ist, die mindestens eine Beschichtung (22) ortsaufgelöst mit variierbarer Heizleistung zu beaufschlagen und/oder wobei mehrere nebeneinander angeordnete Erwärmungseinheiten (12) vorgesehen sind, um die mindestens eine Beschichtung (22) ortsaufgelöst mit variierbarer Heizleistung zu beaufschlagen.

9. Trocknungseinheit nach Anspruch 8, wobei die mindestens eine Erwärmungseinheit (12) als ein Laser oder eine Laserdiode ausgebildet ist, wobei mehrere nebeneinander angeordnete Erwärmungseinheiten (12) als ein eindimensionales oder zweidimensionales Laser-Array ausgeführt sind.

10. Trocknungssystem (100), aufweisend mindestens eine Trocknungseinheit (10) gemäß einem der Ansprüche 6 bis 9, und aufweisend mindestens eine Fördervorrichtung (110) zum Bewegen eines mit der mindestens einen Beschichtung (22) versehenen Substrats (21) zumindest entlang einer Förderrichtung (F) der Fördervorrichtung (110) durch die mindestens eine Trocknungseinheit (10) oder entlang der mindestens einen Trocknungseinheit (10).

11. Trocknungssystem nach Anspruch 10, wobei das Trocknungssystem (100) mehrere in Förderrichtung (F) nacheinander und/oder beidseitig des Substrats (21) parallel zueinander angeordnete Trocknungseinheiten (10) aufweist.

## Geänderte Patentansprüche

### Geänderte Patentansprüche gemäss Regel 137(2) EPÜ.

1. Verfahren (30) zum Einstellen einer Restfeuchte von mindestens einer auf einem Substrat (21) aufgebrachten Beschichtung (22) durch mindestens eine Erwärmungseinheit (12), wobei das mit der mindestens einen Beschichtung (22) beaufschlagte Substrat (21) entlang einer Förderrichtung (F) bewegt wird, wobei eine Restfeuchte der mindestens einen Beschichtung (22) basierend auf Messdaten von mindestens einem Sensor (11) ermittelt wird, und wobei abhängig von der ermittelten Restfeuchte der mindestens einen Beschichtung (22) die mindestens eine Erwärmungseinheit (12) aktiviert und/oder in ihrer Heizleistung gesteuert und/oder geregelt wird, **dadurch gekennzeichnet, dass** ein freigesetzter Dampf und/oder Dunst durch eine kontrollierte Strömung 14 abtransportiert wird.

2. Verfahren nach Anspruch 1, wobei die mindestens eine Beschichtung (22) ortsaufgelöst entlang der Förderrichtung (F) und/oder quer zur Förderrichtung (F) durch die mindestens eine Erwärmungseinheit (12) mit Wärme beaufschlagt wird.

3. Verfahren nach Anspruch 1 oder 2, wobei die Restfeuchte der mindestens einen Beschichtung (22) ortsaufgelöst entlang der Förderrichtung (F) und/oder quer zur Förderrichtung (F) anhand von Messdaten von mindestens einem Sensor (11) ermittelt wird.

4. Verfahren nach Anspruch 3, wobei basierend auf der ortsaufgelöst ermittelten Restfeuchte der mindestens einen Beschichtung (22) die mindestens eine Beschichtung (22) ortsaufgelöst entlang der Förderrichtung (F) und/oder quer zur Förderrichtung (F) durch die mindestens eine Erwärmungseinheit (12) mit Wärme beaufschlagt wird.

5. Verfahren nach einem der Ansprüche 1 bis 4, wobei anhand der Messdaten des mindestens einen Sensors (11) eine örtliche Verteilung der Restfeuchte von mindestens einem Oberflächenabschnitt der Beschichtung (22) ermittelt wird, wobei durch die mindestens eine Erwärmungseinheit (12) ein auf die ermittelte örtliche Verteilung der Restfeuchte des mindestens einen Oberflächenabschnitts angepasstes Erwärmungsprofil eingestellt wird.

6. Trocknungseinheit (10) zum Durchführen eines Verfahrens (30) gemäß einem der vorhergehenden Ansprüche, aufweisend mindestens einen Sensor (11), welcher dazu eingerichtet ist, von einer Restfeuchte abhängige Messdaten von einer Oberfläche mindestens einer Beschichtung (22) zu ermitteln, aufweisend mindestens eine Erwärmungseinheit (12), welche dazu eingerichtet ist, die mindestens eine Beschichtung (22) eines Substrats (21) mit Wärme zu beaufschlagen.

7. Trocknungseinheit nach Anspruch 6, wobei der mindestens eine Sensor (11) dazu eingerichtet ist, von einer Restfeuchte der Beschichtung (22) abhängige Messdaten ortsaufgelöst zu ermitteln und/oder wobei die Trocknungseinheit (10) mindestens ein Array aus mehreren Sensoren (11) aufweist.

8. Trocknungseinheit nach Anspruch 6 oder 7, wobei die mindestens eine Erwärmungseinheit (12) dazu eingerichtet ist, die mindestens eine Beschichtung (22) ortsaufgelöst mit variierbarer Heizleistung zu beaufschlagen und/oder wobei mehrere nebeneinander angeordnete Erwärmungseinheiten (12) vorgesehen sind, um die mindestens eine Beschichtung (22) ortsaufgelöst mit variierbarer Heizleistung zu beaufschlagen.

9. Trocknungseinheit nach Anspruch 8, wobei die mindestens eine Erwärmungseinheit (12) als ein Laser oder eine Laserdiode ausgebildet ist, wobei mehrere nebeneinander angeordnete Erwärmungseinheiten (12) als ein eindimensionales oder zweidimensionales Laser-Array ausgeführt sind.

10. Trocknungssystem (100), aufweisend mindestens eine Trocknungseinheit (10) gemäß einem der Ansprüche 6 bis 9, und aufweisend mindestens eine Fördervorrichtung (110) zum Bewegen eines mit der mindestens einen Beschichtung (22) versehenen Substrats (21) zumindest entlang einer Förderrichtung (F) der Fördervorrichtung (110) durch die mindestens eine Trocknungseinheit (10) oder entlang der mindestens einen Trocknungseinheit (10).

11. Trocknungssystem nach Anspruch 10, wobei das Trocknungssystem (100) mehrere in Förderrichtung (F) nacheinander und/oder beidseitig des Substrats (21) parallel zueinander angeordnete Trocknungseinheiten (10) aufweist.
